# FASCICULE DE BREVET EUROPEEN

(11) **EP 0 773 115 B1**
(45) Date de publication et mention de la délivrance du brevet: **07.06.2000**
(21) Numéro de dépôt: 96116902.6
(22) Date de dépôt: 21.10.1996
(51) Int. Cl.: B60C 9/22, B60C 9/20

(54) **Pneumatique "Poids-Lourds" radial avec armature de sommet ayant une nappe multipartite**
Radialer LKW-Reifen mit einer mehrteiligen Gürtelschicht
Radial heavy-duty tyre with a belt comprising a multi-sections layer

(30) Priorité: 08.11.1995 FR 9513304
(43) Date de publication de la demande: 14.05.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Burlacot, Laurence, 63200 Riom (FR)
(74) Mandataire: Devaux, Edmond-Yves

(56) Documents cités:
- FR-A- 792 853
- FR-A- 2 419 185
- FR-A- 2 622 844
- US-A- 4 942 914

## Description

L'invention concerne un pneumatique à armature de carcasse radiale ancrée dans chaque bourrelet à au moins une tringle, et comprenant une armature de sommet constituée par au moins deux nappes dites de travail, superposées et formées de fils ou câbles parallèles entre eux dans chaque nappe et croisés d'une nappe à la suivante en formant avec la direction circonférentielle du pneumatique des angles au plus égaux à 45° en valeur absolue.

Elle concerne plus particulièrement un pneumatique du type "Poids-Lourds", dont le rapport de la hauteur sur jante H sur sa largeur axiale maximale S est au plus égale à 0,80, et destiné à équiper un véhicule de moyen ou fort tonnage, tel que camion, autobus, remorque ....etc...

Il est très largement connu d'utiliser dans un pneumatique des armatures de sommet composées, d'une part de nappes dites de travail formées de câbles faisant avec la direction circonférentielle un certain angle, et d'autre part de nappes additionnelles formées de câbles orientés sensiblement circonférentiellement. Un tel exemple de structure est montré et décrit dans le brevet US 3 677 319, les nappes de travail étant formées d'éléments métalliques orientés à des angles compris entre 18° et 75°, alors que les nappes additionnelles sont formées de câbles textiles orientés à 0°. Une telle architecture permet de concilier les qualités contradictoires à obtenir par le pneumatique de tourisme : tenue de route du véhicule et confort, résistance à l'usure et résistance au roulement, par exemple. Les nappes textiles additionnelles peuvent être disposées soit sous, soit sur, soit entre les nappes de câbles métalliques, la largeur de l'ensemble textile étant compris entre 25 et 75 % de la largeur de la structure métallique.

Le brevet FR 2 419 185 enseigne que le type de pneumatique concerné, à rapport H/S faible, bien que présentant de nombreux avantages, comporte aussi un certain nombre d'inconvénients, tel que l'adhérence médiocre de la zone équatoriale de la bande de roulement, dus au raccourcissement de l'aire de contact dans le sens longitudinal du pneumatique. Afin de remédier auxdits inconvénients, cause d'une mise en précontrainte des zones marginales des nappes de sommet, et en conséquence de cisaillements entre nappes, le brevet FR préconise de disposer, entre l'armature de carcasse et la nappe de travail radialement intérieure, dans deux zones distinctes et distantes du plan équatorial, deux blocs limiteurs constitués chacun de deux nappes superposées de câbles inextensibles, croisés d'une nappe à la suivante en faisant avec la direction circonférentielle des angles opposés, au plus égaux en valeur absolue à la moitié du plus petit angle utilisé dans les nappes de travail, et différents de 0°. Si la solution préconisée dans ledit brevet permet en outre une amélioration de l'endurance du pneumatique, la résistance à la séparation entre nappes de travail au niveau de leurs extrémités étant accrue, et les nappes des blocs limiteurs n'étant pas sujettes à ladite séparation, par contre elle procure un frettage trop important entraînant le risque de mise en compression des câbles de nappes de travail lors de la mise à plat.

En vue d'améliorer l'usure du pneumatique à H/S faible, ainsi que la résistance à la séparation des nappes de sommet, le brevet US 4 934 429 revendique, au contraire du précédent, l'emploi de câbles métalliques, extensibles et dont l'orientation par rapport à la direction circonférentielle peut être nulle, dans une armature additionnelle, composée d'au moins une nappe à deux portions de part et d'autre du plan équatorial, l'extensibilité des câbles étant choisie en fonction des modules d'extension désirés respectivement pour la(les) nappe(s) de renforcement et les nappes de sommet.

Dans le cas de l'emploi de pneumatiques, tels que décrits ci-dessus, par exemple sur des remorques "Poids-Lourds" dites basses, le centre de gravité desdites remorques étant généralement abaissé par rapport aux centres de gravité usuels des camions et/ou des tracteurs routiers et les pneumatiques travaillant à des taux de flexion importants, l'emploi de nappes additionnelles de renforcement de câbles circonférentiels élastiques ou l'emploi de blocs limiteurs à câbles inclinés par rapport à la direction circonférentielle, ne permet pas d'obtenir le meilleur compromis entre d'une part l'endurance de l'armature de sommet et d'autre part l'usure de la bande de roulement du pneumatique, l'endurance de l'armature de sommet pouvant concerner la séparation entre nappes et/ou la rupture des câbles par compression.

Le pneumatique, conforme à l'invention, ayant une armature de carcasse radiale surmontée radialement d'une armature de sommet comprenant au moins deux nappes de sommet de travail des câbles métalliques inextensibles, croisés d'une nappe à la suivante en formant avec la direction circonférentielle des angles compris entre 10° et 45°, et deux blocs limiteurs composés chacun d'au moins une nappe de câbles métalliques orientés par rapport à la direction circonférentielle d'un angle compris entre 0° et 10°, lesdits blocs étant disposés dans deux zones distinctes de part et d'autre du plan équatorial, et radialement entre l'armature de carcasse et la nappe de sommet de travail radialement la plus à l'extérieur, est caractérisé en ce que les deux blocs limiteurs sont axialement réunis par une armature additionnelle composée d'au moins une nappe de câbles textiles ou métalliques orientés circonférentiellement , centrée sur le plan équatorial, et dont la rigidité à l'extension par unité de largeur, mesurée dans la direction des câbles, est, dans le domaine de fonctionnement du pneumatique, au plus égale à 0,5 fois la rigidité à l'extension, mesurée dans les mêmes conditions, de la nappe des blocs limiteurs la plus extensible.

Il faut entendre par fil ou câble textile tout fil ou câble réalisé à partir de filaments de matière synthétique telle que, par exemple, la rayonne, un polyamide aliphatique et/ou aromatique, un polyester. Un fil ou câble métallique est généralement en acier.

La rigidité d'extension d'une nappe de câbles est le rapport de la force de traction, exercée selon la direction des câbles par unité de largeur et nécessaire pour obtenir un allongement relatif donné, par ledit allongement.

Afin de réduire la tension supportée par les blocs limiteurs métalliques, et ainsi de limiter les risques de rupture par extension des câbles utilisés, il est avantageux de disposer en outre, axialement à l'extérieur de chaque bloc limiteur, une armature additionnelle latérale, composée elle aussi d'au moins une nappe de fils ou câbles textiles ou métalliques, répondant ou ne répondant pas aux mêmes conditions de rigidité à l'extension que l'armature additionnelle centrale, et dont la largeur axiale est telle que son extrémité axialement extérieure soit située axialement à l'intérieur de l'extrémité axialement extérieure de la nappe sommet de travail la plus large.

De manière préférentielle, en combinaison avec la présence d'armatures additionnelles ou en l'absence de telles armatures, l'épaisseur de mélange caoutchouteux vulcanisé, mesurée radialement entre l'ensemble des génératrices radialement extérieures des câbles de la nappe radialement la plus à l'extérieur d'un bloc limiteur et l'ensemble des génératrices des câbles de la nappe de sommet de travail radialement au dessus de cette dernière, est au moins égal à la somme des rayons des sections transversales respectivement des câbles des deux nappes ci-dessus et dans tous les cas à 1,1 mm.

Que chaque bloc limiteur soit obtenu par pose d'une ou de deux nappes préfabriquées sur l'armature de carcasse, ou par enroulement d'un fil ou câble autour de ladite armature de carcasse, la largeur axiale de chaque bloc sera avantageusement comprise entre les valeurs M_{B} et m_{B}, M_{B} étant égale à (0,4 - 0,32 H₀/S₀). S₀ et m_{B} à (0,2 - 0,16 H₀/S₀). S₀, alors que les axes médians desdits blocs sont axialement distants d'une quantité comprise entre les valeurs D_{B} et d_{B}, D_{B} étant égale à (0,8 - 0,64 H₀/S₀). S₀ et d_{B} à (0,5 - 0,4 H₀/S₀). S₀, H₀/S₀ étant le rapport de forme de la fibre moyenne de l'armature de carcasse, c'est-à-dire le rapport de sa hauteur sur jante H₀ sur sa largeur axiale maximale S₀. Cette disposition axiale permet d'obtenir pour les câbles métalliques des blocs limiteurs un coefficient de sécurité plus élevé, le coefficient de sécurité d'un câble étant le rapport de sa force de rupture sur la force maximale de tension appliquée lors du roulage du pneumatique, ce qui permet une meilleure endurance à la fatigue, tout en conservant les bonnes propriétés de résistance à la séparation entre les nappes de sommet de travail.

Il est aussi avantageux, afin de parvenir à l'optimum de résistance à la compression des câbles de l'armature de sommet, et en particulier de la nappe de sommet de travail la plus proche de l'armature de carcasse, d'utiliser pour lesdites nappes de sommet de travail des angles inégaux, l'angle que font les câbles de la nappe de travail la plus proche de l'armature de carcasse étant supérieur à l'angle que font les câbles de la seconde nappe de travail. De même, un rayon de courbure transversal de la bande de roulement, préférentiellement supérieur à 1,5 fois son rayon circonférentiel, mesuré dans le plan équatorial, améliore les performances en endurance de l'armature de sommet.

Les caractéristiques et avantages de l'invention seront mieux compris à l'aide de la description qui suit et qui se réfère au dessin, illustrant à titre non limitatif un exemple d'exécution, et sur lequel :
- la figure 1 représente schématiquement, vue en section méridienne, une armature de sommet conforme à l'invention,
- la figure 2 représente, vue en plan et en écorché, l'armature de sommet de la figure 1.

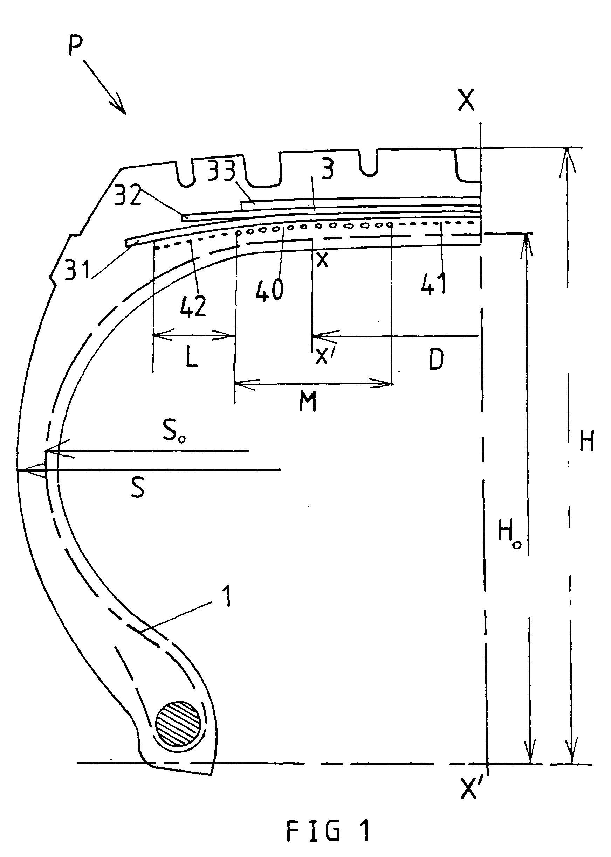

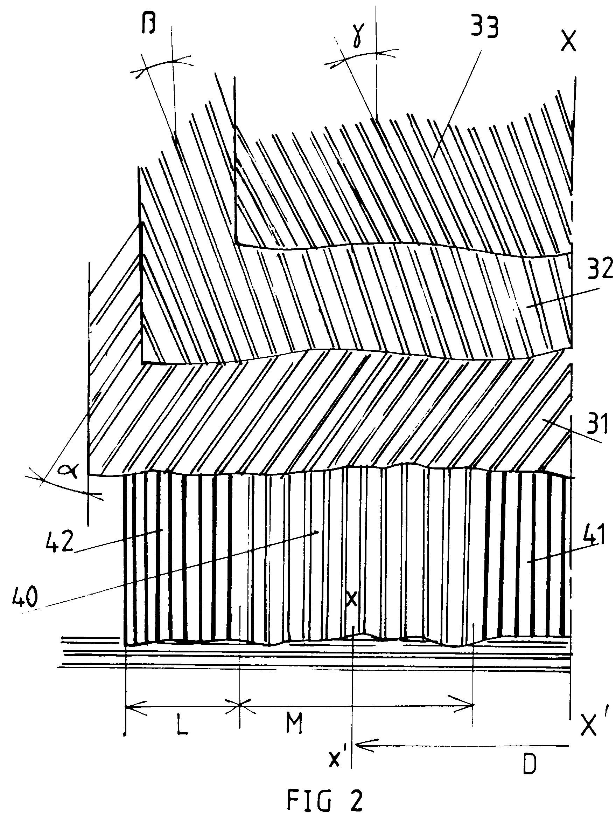

Le pneumatique P, de dimension 215/75 R 17.5 X, a un rapport de forme H/S égal à 0,75. Ledit pneumatique comprend une armature de carcasse radiale (1), ancrée dans chaque bourrelet à au moins une tringle en formant un retournement, et formée d'une seule nappe de câbles métalliques. Cette armature de carcasse (1) est frettée par une armature de sommet (3), formée radialement de l'extérieur à l'intérieur, (figures 1 et 2)
- radialement la plus à l'extérieur, d'une nappe (33) dite de protection, constituée de câbles métalliques élastiques, c'est-à-dire des câbles ayant un allongement supérieur ou égal à 0,3% pour une force d'extension de 1 daN, et ayant un module d'Young systématiquement inférieur à 130 GPA, lesdits câbles étant orientés par rapport à la direction circonférentielle XX' d'un angle de 18°, et ladite nappe étant centrée sur le plan équatorial XX' avec une largeur axiale de 120 mm;
- radialement au dessous de la nappe (33), de la deuxième nappe de sommet de travail (32), formée de câbles métalliques inextensibles, c'est-à-dire de câbles ayant un allongement inférieur à 0,3% pour une force d'extension de 1 daN, et ayant un module d'Young toujours supérieur à 160 GPA, pour une force d'extension comprise entre F_{R} /10 et F_{R} /1,2, F_{R} étant la force de rupture dudit câble. Les câbles de cette nappe (32) sont orientés dans la même direction que les câbles de la nappe (33), et font avec la direction circonférentielle un angle β de 18°, ladite nappe de travail (32) ayant une largeur de 152 mm ;
- puis d'une première nappe de travail (31), constituée de câbles identiques à ceux de la nappe (32), et faisant avec la direction circonférentielle un angle α égal à 26°, mais croisés avec ceux de la deuxième nappe de travail (32), ladite nappe (31) ayant une largeur axiale de 166 mm ;
- et enfin, entre la première nappe de travail (31) et l'armature de carcasse, d'une armature (4) multipartite constituée d'une part de deux blocs limiteurs (40), et d'autre part d'une armature de renforcement additionnelle centrale (41) et de deux armatures de renforcement additionnelles latérales (42).

Chaque bloc limiteur (40) est formé, dans le cas étudié, d'une couche (40) obtenue par enroulement d'un câble métallique inextensible, [répondant à la même définition d'élongation que les câbles des nappes de sommet de travail (31) et (32)], jusqu'à obtention d'une largeur axiale M, égale à 27 mm pour la dimension considérée. La distance axiale entre câbles ou pas p₀ étant faible (70 câbles par dm de largeur), l'angle d'enroulement est pratiquement égal à 0°. Quant aux axes médians xx' des blocs limiteurs, ils sont axialement distants d'une quantité D égale à 63 mm, les quantités H₀ et S₀ étant respectivement égales à 168 mm et 221 mm. Entre les extrémités axialement intérieures des deux blocs limiteurs (40) est disposée une première armature de renforcement centrale (41) constituée d'une seule couche obtenue par enroulement d'un câble métallique en acier orienté quasi-circonférentiellement ; le pas entre les enroulements dudit câble métalliques et les caractéristiques d'élongation respectivement des blocs limiteurs et de ceux de la nappe additionnelle étant tels que la rigidité d'extension de la nappe additionnelle centrale soit égale à 0,5 fois la rigidité d'extension du bloc limiteur, dans le domaine de fonctionnement du pneumatique. Axialement à l'extérieur de chaque extrémité axialement extérieure de chaque bloc limiteur (40), est disposée une deuxième armature de renforcement additionnelle (42) constituée d'une seule couche obtenue, aussi par enroulement, d'un câble en polyamide aromatique, l'enroulement se prolongeant jusqu'à obtenir pour ladite armature latérale une largeur L telle que l'extrémité axialement extérieure soit axialement à l'intérieur de l'extrémité axialement extérieure de la nappe de sommet de travail radialement la plus proche de l'armature de carcasse, qui est la plus large.

## Revendications

1. Pneumatique, ayant une armature de carcasse radiale (1) surmontée radialement d'une armature de sommet (3) comprenant au moins deux nappes de sommet de travail (31, 32) de câbles métalliques inextensibles, croisés d'une nappe à la suivante en formant avec la direction circonférentielle XX' des angles compris entre 10° et 45°, et deux blocs limiteurs (40) composés chacun d'au moins une nappe (40) de câbles métalliques orientés par rapport à la direction circonférentielle XX' d'un angle compris entre 0° et 10°, lesdits blocs (40) étant disposés dans deux zones distinctes de part et d'autre du plan équatorial XX', et radialement entre l'armature de carcasse (1) et la nappe de sommet de travail radialement la plus à l'extérieur (32), est caractérisé en ce que les deux blocs limiteurs (40) sont axialement réunis par une armature additionnelle (41) composée d'au moins une nappe (41) de câbles textiles ou métalliques orientés circonférentiellement, centrée sur le plan équatorial XX' , et dont la rigidité à l'extension par unité de largeur, mesurée dans la direction des câbles, est, dans le domaine de fonctionnement du pneumatique, au plus égale à 0,5 fois la rigidité à l'extension, mesurée dans les mêmes conditions, de la nappe des blocs limiteurs (40) la plus extensible.

2. Pneumatique selon la revendication 1, caractérisé en ce que des armatures additionnelles latérales (42) sont disposées axialement à l'extérieur des blocs limiteurs (40), chaque armature latérale (42) étant constituée d'au moins une nappe (42) de câbles circonférentiels textiles ou métalliques et ayant une largeur L, telle que son extrémité axialement à l'extérieur soit axialement à l'intérieur de l'extrémité de la nappe de travail axialement la plus large.

3. Pneumatique selon la revendication 2, caractérisé en ce que les câbles de chaque armature latérale (42) ont les mêmes propriétés que les câbles de l'armature centrale (41).

4. Pneumatique selon l'une des revendications 1 à 3, caractérisé en ce que l'épaisseur de mélange caoutchouteux vulcanisé, mesurée radialement entre l'ensemble des génératrices radialement extérieures des câbles de la nappe (40) radialement la plus à l'extérieur d'un bloc limiteur (40) et l'ensemble des génératrices des câbles de la nappe de sommet de travail radialement au dessus de cette dernière, est au moins égal à la somme des rayons des sections transversales respectivement des câbles des deux nappes ci-dessus, et dans tous les cas à 1,1 mm.

5. Pneumatique selon l'une des revendications 1 à 4, caractérisé en ce que la largeur axiale M de chaque bloc (40) sera avantageusement comprise entre les valeurs M_{B} et m_{B}, M_{B} étant égal à (0,4 - 0,32 H₀/S₀). S₀ et m_{B} à (0,2 - 0,16 H₀/S₀). S₀, alors que les axes médians xx' desdits blocs (40) seront axialement distants d'une quantité D comprise entre les valeurs D_{B} et d_{B}, D_{B} égale à (0,8 - 0,64 H₀/S₀). S₀ et d_{B} à (0,5 - 0,4 H₀/S₀). S₀, H₀/S₀ étant le rapport de forme de la fibre moyenne de l'armature de carcasse (1).

## Patentansprüche

1. Luftreifen, der eine radiale Karkassenbewehrung (1) aufweist, über der radial eine Scheitelbewehrung (3) angebracht ist, die mindestens zwei Scheitel-Arbeitslagen (31, 32) aus undehnbaren Metallseilen aufweist, die von einer Lage zur folgenden überkreuz laufen und dabei mit der Umfangsrichtung XX' Winkel bilden, die zwischen 10° und 45° liegen, und zwei Begrenzungsblöcke (40), die jeweils mindestens aus einer Lage (40) aus Metallseilen zusammengesetzt sind, die bezüglich der Umfangsrichtung XX' unter einem Winkel angeordnet sind, der zwischen 0° und 10° liegt, wobei die genannten Blöcke (40) in zwei gesonderten Zonen beiderseits der Äqutorialebene XX' angeordnet sind, sowie radial zwischen der Karkassenbewehrung (1) und der Scheitel-Arbeitslage (32), die radial am weitesten aussen liegt, dadurch gekennzeichnet, daß die beiden Begrenzungsblöcke (40) axial durch eine zusätzliche Bewehrung (41) vereint sind, die aus mindestens einer Lage (41) aus Textil- oder Metallseilen zusammengesetzt ist, die in Umfangsrichtung ausgerichtet sind, auf die Äquatorialebene XX' zentriert ist und bei der die Dehnung pro Breiteneinheit, gemessen in Richtung der Seile und unter Betriebsbedingungen des Reifens, höchstens gleich ist dem 0,5-fachen der Dehnungssteifigkeit der am meisten dehnbaren Lage der Begrenzungsblöcke (40), gemessen unter den selben Bedingungen.

2. Reifen nach Anspruch 1, dadurch gekennzeichnet, daß die zusätzlichen seitlichen Bewehrungen (42) axial auf der Außenseite der Begrenzungsblöcke (40) angeordnet sind, wobei jede seitliche Bewehrung (42) von mindestens einer Lage (42) aus in Umfangsrichtung verlaufenden Textil- oder Metallseilen gebildet ist und eine solche Breite L aufweist, daß ihr axial außenliegendes Ende axial auf der Innenseite des Endes der Arbeitslage liegen soll, die axial am breitesten ist.

3. Reifen nach Anspruch 2, dadurch gekennzeichnet, daß die Seile einer jeden seitlichen Bewehrung (42) die selben Eigenschaften aufweisen wie die Seile der mittigen Bewehrung (41).

4. Reifen nach einem der Ansprüche 1 bis 3, dadurch gekennzeichnet, daß die Dicke der vulkanisierten Gummimischung, radial zwischen der Gruppe von radial außenliegenden Erzeugenden der Seile der Lage (40) eines Begrenzungsblocks (40), die radial am weitesten außen liegt, und der Gruppe von Erzeugenden der Seile der Scheitel-Arbeitslage radial, über dieser letztgenannten gemessen, mindestens gleich ist der Summe der Radien der jeweiligen Querschnitte der Seile der obigen beiden Lagen, und in jedem Fall mindestens gleich 1,1 mm.

5. Reifen nach einem der Ansprüche 1 bis 4, dadurch gekennzeichnet, daß die axiale Breite M eines jeden Blocks (40) vorteilhafterweise zwischen den Werten M_{B} und m_{B} liegt, wobei M_{B} gleich ist (0,4 - 0,32H₀/S₀).S₀ und m_{B} gleich ist (0,2 - 0,16H₀/S₀).S₀, während die Mittelachsen xx' der genannten Blöcke (40) axial um ein Maß D beabstandet sind, das zwischen den Werten D_{B} und d_{B} liegt, wobei D_{B} gleich ist (0,8 - 0,64H₀/S₀).S₀ und d_{B} gleich ist (0,5 - 0,4H₀/S₀).S₀, und wobei H₀/S₀ das Formverhältnis der Mittelfaser der Karkassenbewehrung (1) ist.

## Claims

1. A tyre, having a radial carcass reinforcement (1) surmounted radially by a crown reinforcement (3) comprising at least two working crown plies (31, 32) of inextensible metal cables which are crossed from one ply to the next, forming angles of between 10° and 45° with the circumferential direction XX', and two limiting blocks (40) each composed of at least one ply (40) of metal cables oriented with respect to the circumferential direction XX' at an angle of between 0° and 10°, said blocks (40) being arranged in two separate regions on either side of the equatorial plane XX', and radially between the carcass reinforcement (1) and the radially outermost working crown ply (32), characterised in that the two limiting blocks (40) are axially joined together by an additional reinforcement (41) which is composed of at least one ply (41) of circumferentially oriented textile or metal cables which is centred on the equatorial plane XX', the tensile rigidity per unit of width of which, measured in the direction of the cables, is, in the field of operation of the tyre, at most equal to 0.5 times the tensile rigidity, measured under the same conditions, of the most extensible ply of the limiting blocks (40).

2. A tyre according to Claim 1, characterised in that additional lateral reinforcements (42) are arranged axially to the outside of the limiting blocks (40), each lateral reinforcement (42) being formed of at least one ply (42) of textile or metal circumferential cables and having a width L, such that its axially outer end is axially to the inside of the end of the axially widest working ply.

3. A tyre according to Claim 2, characterised in that the cables of each lateral reinforcement (42) have the same properties as the cables of the central reinforcement (41).

4. A tyre according to one of Claims 1 to 3, characterised in that the thickness of vulcanised rubber mix, measured radially between the set of the radially outer generatrices of the cables of the radially outermost ply (40) of a limiting block (40) and the set of the generatrices of the cables of the working crown ply radially above the latter, is at least equal to the sum of the radii of the respective cross-sections of the cables of the above two plies, and in all cases at least equal to 1.1 mm.

5. A tyre according to one of Claims 1 to 4, characterised in that the axial width M of each block (40) will advantageously be between the values M_{B} and m_{B}, M_{B} being equal to (0.4 - 0.32 H₀/S₀).S₀ and m_{B} being equal to (0.2 - 0.16 H₀/S₀) - S₀, while the median axes xx' of said blocks (40) will be spaced apart axially by an amount D lying between the values D_{B} and d_{B}, D_{B} being equal to (0.8 - 0.64 H₀/S₀).S₀ and d_{B} being equal to (0.5 - 0.4 H₀/S₀).S₀, H₀/S₀ being the form ratio of the centre line of the carcass reinforcement (1).
